# EUROPEAN PATENT SPECIFICATION

(11) **EP 4 354 815 B1**
(45) Date of publication and mention of the grant of the patent: **31.12.2025**
(21) Application number: 22836869.2
(22) Date of filing: 04.07.2022
(51) Int. Cl.: H04L 69/40, H04L 67/51, H04L 41/0806, H04L 43/0805, H04L 43/0852, H04L 43/0876

(54) **INSTANTIATING AN EDGE APPLICATION SERVER**
INSTANZIERUNG EINES EDGE-ANWENDUNGSSERVERS
INSTANCIATION D'UN SERVEUR D'APPLICATION PÉRIPHÉRIQUE

(30) Priority: 07.07.2021 CN 202110766584
(43) Date of publication of application: 17.04.2024
(73) Proprietor: Huawei Technologies Co., Ltd., Longgang Shenzhen, Guangdong 518129 (CN)
(72) Inventor: YAO, Qi, Shenzhen, Guangdong 518129 (CN); LI, Shitao, Shenzhen, Guangdong 518129 (CN); ZONG, Zaifeng, Shenzhen, Guangdong 518129 (CN)
(74) Representative: Epping - Hermann - Fischer
(86) International application number: PCT/CN2022/103709
(87) International publication number: WO 2023/280118

(56) References cited:
- WO-A1-2021/060937
- CN-A- 113 630 266
- US-A1- 2021 111 953
- US-A1- 2021 352 156
- "3 Generation Partnership Project; Technical Specification Group Services and System Aspects; Architecture for enabling Edge Applications; (Release 17)", no. V17.0.0, 28 June 2021 (2021-06-28), pages 1 - 157, XP052029833, Retrieved from the Internet <URL:https://ftp.3gpp.org/Specs/archive/23_series/23.558/23558-h00.zip 23558-h00.doc> [retrieved on 20210628]
- 3GPP TSG SA: ""Architecture for Enabling Edge Applications; (Release 17)"", 3GPP TS 23.558 V17.0.0, 28 June 2021 (2021-06-28), XP052029833
- SAMSUNG: ""Resolve EN on Dynamic EAS Instantiation"", 3GPP TSG-SA WG6 MEETING #43 S6-211170, 19 May 2021 (2021-05-19), XP052012634
- 3GPP TSG SA: ""Management and Orchestration; Study on Enhancements of Edge Computing Management(Release 17)"", 3GPP TR 28.814 V1.0.0, 8 June 2021 (2021-06-08), XP052029496

## Description

### CROSS-REFERENCE TO RELATED APPLICATIONS

This application claims priority to Chinese Patent Application No. 202110766584.3, filed with the China National Intellectual Property Administration on July 7, 2021 and entitled "METHOD FOR INSTANTIATING EDGE APPLICATION SERVER AND APPARATUS.

### TECHNICAL FIELD

This application relates to the field of communication technologies, and in particular, to a method for instantiating an edge application server and an apparatus.

### BACKGROUND

An edge data network (edge data network, EDN) may be a local data center. The EDN includes an edge enabler server (edge enabler server, EES) and a plurality of edge application servers (edge application server, EAS). Each EDN has a specific service scope. The EES may be a control network element or a management network element in a mobile edge computing (mobile edge computing, MEC) node, and is responsible for managing each EAS deployed in the EDN, for example, registration and domain name server (domain name server, DNS) parsing. In addition, the EES may invoke a capability exposure function of a network.

User equipment (user equipment, UE) may include an edge enabler client (edge enabler client, EEC) and an application client (application client, AC). The EEC provides necessary support for the application client on the UE, and the UE may register with the EES through an EDGE-1 interface.

In a conventional technology, when the UE registers with the EES, the EES may detect whether the deployed EAS meets application information to be accessed by the UE. When the EES detects that the deployed EAS does not meet the application information to be accessed by the UE or the EES finds that there is no instantiated EAS in the current EDN, how to meet an access request of the UE is not defined. WO2021060937A1 discloses a distributed discovery & notification scheme for edge computing according to which an Edge Configuration Server (ECS) receives EAS-registration data from a "source" EES and selectively pushes availability notifications to "target" EESs so UEs can discover existing edge servers without querying a central node each time. 3GPP standard document TS 23.558 Rel-17 - (Official 3GPP specification for Edge Application Server discovery, exposure and lifecycle management) discloses an EES that handles UE discovery requests and may trigger immediate instantiation of a missing EAS via an edge-cloud management system, but the standard reacts on the first miss and defines no counting/threshold logic.

### SUMMARY

The objects of the invention are covered by the appended independent claims.

Preferred embodiments are covered by the appended dependent claims.

Embodiments of this application provide a method for instantiating an edge application server and an apparatus, to dynamically instantiate the edge application server.

According to a first aspect, a method for instantiating an edge application server is provided. The method may be performed by a first network element, or may be performed by a chip similar to a first network element. The first network element may be an application service provider or a management system. **In** the method, the first network element may receive first information from a second network element. The first information may include network information and application information. The network information may indicate a first network, and the application information may indicate a first application. The first information may further include information about a first event that is related to the first application and that is in the first network. The first event includes at least one of the following: an edge application server corresponding to the first application is not found in the first network, the edge enabler server corresponding to the first application is not found in the first network, and performance information of the edge application server corresponding to the first application in the first network. The first network element may determine, when the first event meets a first condition, to instantiate a first edge application server corresponding to the first application in the first network.

Based on the foregoing solution, the first network element may determine, based on a first event reported by the second network element, to dynamically instantiate the edge application server of the first application when the first event meets the first condition. This may improve efficiency of operation and maintenance management.

**In** a possible implementation, that the edge application server corresponding to the first application is not found in the first network includes: The edge application server corresponding to the first application is not deployed or instantiated in the first network.

**In** another possible implementation, that the edge application server corresponding to the first application is not found in the first network includes: The edge application server corresponding to the first application that meets a terminal requirement (UE required) is not found in the first network. In other words, although the edge application server corresponding to the first application is deployed or instantiated in the first network, performance of the edge application server of the first application cannot meet the terminal requirement.

In a possible implementation, when the first event includes that the edge application server corresponding to the first application is not found in the first network, the first condition may include that a quantity of times that the edge application server corresponding to the first application is not found in the first network in first duration is greater than or equal to a first threshold. When the first event includes that the edge enabler server corresponding to the first application is not found in the first network, the first condition may include that a quantity of times that the edge enabler server corresponding to the first application is not found in the first network in second duration is greater than or equal to a second threshold. When the first event includes the performance information of the edge application server corresponding to the first application in the first network, the first condition may include at least one of the following: load of the edge application server is greater than or equal to a third threshold and the edge application server breaks down.

Based on the foregoing solution, when a plurality of terminals want to access the first application or one terminal wants to access the first application for a plurality of times, the edge application server of the first application may be instantiated. This may improve user experience.

In a possible implementation, the first network element may send an edge application server instantiation request to the management system, where the edge application server instantiation request is used to instantiate the edge application server, and the edge application server instantiation request includes the network information and the application information.

In a possible implementation, the first information may further include a quantity of times that the first event occurs.

Based on the foregoing solution, the second network element may report the first event to the first network element when detecting the first event for a plurality of times. This may improve utilization of transmission resources.

In a possible implementation, a quantity of times that the edge enabler server corresponding to the first application is not found in the first network may be a quantity of times that the first network element receives the first event. Alternatively, a quantity of times that the edge enabler server corresponding to the first application is not found in the first network may be a quantity of times that the first network element receives the first event.

Based on the foregoing solution, the second network element may report the first event to the first network element for a plurality of times, and may report a requirement of the terminal to the first network element in time when the terminal wants to access the first application but the edge application server of the first application is not deployed in the network. This improves user experience.

In a possible implementation, when the first network element is a management system, before the first network element instantiates, in the first network, the first edge application server corresponding to the first application, the first network element may obtain, from an application service provider, application installation information that is allowed to be instantiated.

Based on the foregoing solution, after obtaining the application installation information that is allowed to be instantiated, the management system may directly communicate with the second network element. This reduces complexity.

In a possible implementation, the first network element may send second information to the second network element, where the second information may indicate that the first edge application server is successfully instantiated.

In a possible implementation, the first network element may subscribe to the first information.

Based on the foregoing solution, the first network element subscribes to the first information, to receive first information of the second network element. This may improve a success rate of receiving the first information by the first network element.

According to a second aspect, a method for instantiating an edge application server is provided. The method may be performed by a second network element, or may be performed by a chip having a function similar to a function of a second network element. The second network element may be an edge enabler server or an edge network configuration server. In the method, the second network element may detect a first event. The first event may include at least one of the following: an edge application server corresponding to a first application is not found in a first network, an edge enabler server corresponding to the first application is not found in the first network, and performance information of the edge application server corresponding to the first application in the first network. The second network element may send first information to a first network element or send indication information to one or more terminals based on the detected first event. The first information may include network information and application information, and the indication information may indicate that the edge application server needs to be instantiated. The network information may indicate the first network, and the application information may indicate the first application.

In a possible implementation, that an edge enabler server corresponding to the first application is not found in the first network includes: The edge application server corresponding to the first application is not deployed or instantiated in the first network, or the edge application server corresponding to the first application that meets a terminal requirement (UE required) is not found in the first network, and an edge configuration server determines that the edge enabler server corresponding to the first application is not found in the first network.

**In** a possible implementation, the indication information indicates that the edge application server or the edge enabler server corresponding to the first application is not found in the first network, or indicates that registration fails. A name of the indication information is not limited.

Based on the foregoing solution, the second network element may report, to the first network element, a first event that is related to the first application and that is detected in the first network, so that the first network element determines whether to instantiate the edge application server in the first network.

**In** a possible implementation, the second network element may receive second information, where the second information may indicate that a first edge application server is successfully instantiated, and the first information may be used to determine whether to instantiate the first edge application server.

Based on the foregoing solution, the first network element may determine, based on a first event reported by the second network element, to dynamically instantiate the edge application server of the first application when the first event meets the first condition. This may improve efficiency of operation and maintenance management.

**In** a possible implementation, the first information may further include a quantity of times that the first event occurs.

**In** a possible implementation, the indication information may indicate that the edge application server fails to be found or the edge enabler client fails to be registered.

Based on the foregoing solution, the second network element may indicate, to the one or more terminals through the indication information, whether the edge application server needs to be dynamically instantiated.

According to a third aspect, a method for instantiating an edge application server is provided. The method may be performed by a first network element, or may be performed by a chip having a function similar to a function of a first network element. The first network element may be an application service provider or a management system. **In** the method, the first network element may receive first request information from one or more terminals, where the first request information may be used to request to instantiate an edge application server. The first request information may include network information, application information, and a terminal identifier. The network information may indicate a first network, the application information may indicate a first application, and the terminal identifier may identify a terminal that sends the first request information. The first network element may determine, based on the first request information, whether to instantiate the edge application server corresponding to the first application in the first network.

Based on the foregoing solution, the terminal sends the first request information to the first network element, to request to instantiate the edge application server of the first application in the first network, so that differentiated service experience may be provided for the terminal. This improves efficiency of operation and maintenance management.

In a possible implementation, when a quantity of one or more terminals reaches a first threshold, it may be determined to instantiate the edge application server corresponding to the first application in the first network; and/or when a subscription level of the terminal identified by the terminal identifier is higher than or equal to a specified level, it may be determined to instantiate the edge application server corresponding to the first application in the first network.

Based on the foregoing solution, when a plurality of terminals want to access the first application or want to access a high subscription level of the first application, the edge application server of the first application may be instantiated, so that differentiated service experience may be provided for the terminal. This improves efficiency of operation and maintenance management.

In a possible implementation, the first network element may send second request information to a management system. The second request information may be used to request to instantiate the edge application server, and the second request information may include the network information and the application information.

In a possible implementation, the network information may include at least one of a network identifier and a location identifier. The network identifier and the location identifier may identify the first network, and the application information may include at least one of an application identifier and an application performance requirement.

In a possible implementation, when the first network element is a management system, before the first network element determines to instantiate the edge application server corresponding to the first application in the first network, the first network element may obtain, from an application service provider, application installation information that is allowed to be instantiated.

Based on the foregoing solution, after obtaining the application installation information that is allowed to be instantiated, the management system may directly communicate with the terminal. This reduces complexity.

In a possible implementation, the first network element may send second information to a second network element or one or more terminals, and the second information may indicate that the edge application server corresponding to the first application is successfully instantiated.

In a possible implementation, when a quantity of one or more terminals does not reach a first threshold, third information may be sent to the one or more terminals. The third information may indicate that the edge application server of the first application is not found in the first network; and/or the third information may be sent to the one or more terminals when the subscription level of the terminal identified by the terminal identifier is lower than the specified level. The third information may indicate that the edge application server of the first application is not found in the first network.

Based on the foregoing solution, when the foregoing condition is not met, the first network element may send the third information to the terminal. In other words, the edge application server of the first application is not instantiated in the first network. This may save resources in an EDN network. According to a fourth aspect, a method for instantiating an edge application server is provided. The method may be performed by a terminal, or may be performed by a chip with a function similar to a function of a terminal. In the method, an edge enabler client may receive indication information from an edge enabler server or an edge network configuration server. The indication information may indicate that an edge application server fails to be found, or the edge enabler client fails to be registered, or the edge application server needs to be instantiated. The edge enabler client may send request information to a first network element based on the indication information, where the request information may include network information and application information. The network information may indicate a first network, and the application information may indicate a first application.

Based on the foregoing solution, the terminal sends the first request information to the first network element, to request to instantiate the edge application server of the first application in the first network, so that differentiated service experience may be provided for the terminal. This improves efficiency of operation and maintenance management.

In a possible implementation, the edge enabler client may send the indication information to an application client.

In a possible implementation, the edge enabler client may receive request information from the application client.

In a possible implementation, the edge enabler client may receive second information from the first network element, where the second information may indicate that an edge application server corresponding to the first application is successfully instantiated.

According to a fifth aspect, a communication apparatus is provided. The apparatus may include modules/units configured to perform the first aspect or any possible implementation of the first aspect, for example, a transceiver unit and a processing unit.

The transceiver unit is configured to receive first information from a second network element, where the first information includes network information and application information, the network information indicates a first network, the application information indicates a first application, and the first information further includes information about a first event that is related to the first application and that is in the first network; and the first event includes at least one of the following: an edge application server corresponding to the first application is not found in the first network, the edge enabler server corresponding to the first application is not found in the first network, and performance information of the edge application server corresponding to the first application in the first network. The processing unit is configured to determine, when the first event meets a first condition, to instantiate a first edge application server corresponding to the first application in the first network.

In a design, when the first event includes that the edge application server corresponding to the first application is not found in the first network, the first condition includes that a quantity of times that the edge application server corresponding to the first application is not found in the first network in first duration is greater than or equal to a first threshold; when the first event includes that the edge enabler server corresponding to the first application is not found in the first network, the first condition includes that a quantity of times that the edge enabler server corresponding to the first application is not found in the first network in second duration is greater than or equal to a second threshold; and when the first event includes the performance information of the edge application server corresponding to the first application in the first network, the first condition includes at least one of the following: load of the edge application server is greater than or equal to a third threshold and the edge application server breaks down.

In a design, the transceiver unit is further configured to send an edge application server instantiation request to the management system, where the edge application server instantiation request is used to instantiate the edge application server, and the edge application server instantiation request includes the network information and the application information.

In a design, the first information further includes a quantity of times that the first event occurs.

In a design, a quantity of times that the edge enabler server corresponding to the first application is not found in the first network is a quantity of times that the first network element receives the first event; or a quantity of times that the edge enabler server corresponding to the first application is not found in the first network is a quantity of times that the first network element receives the first event.

In a design, the processing unit is further configured to obtain, from an application service provider, application installation information that is allowed to be instantiated.

In a design, the transceiver unit is further configured to send second information to the second network element, where the second information indicates that the first edge application server is successfully instantiated.

In a design, the transceiver unit is further configured to send a subscription request to the second network element, where the subscription request is used to subscribe to the first information.

According to a sixth aspect, a communication apparatus is provided. The apparatus may include modules/units configured to perform the second aspect or any possible implementation of the second aspect, for example, a transceiver unit and a processing unit.

The processing unit is configured to detect a first event, where the first event includes at least one of the following: an edge application server corresponding to a first application is not found in a first network, an edge enabler server corresponding to the first application is not found in the first network, and performance information of the edge application server corresponding to the first application in the first network; the transceiver unit is configured to send first information to a first network element or send indication information to one or more terminals based on the detected first event; the first information includes network information and application information, and the indication information indicates that an edge application server needs to be instantiated; and the network information indicates the first network, and the application information indicates the first application.

In a design, the transceiver unit is further configured to receive second information, where the second information indicates that a first edge application server is successfully instantiated, and the first information is used to determine whether to instantiate the first edge application server. In a design, the first information further includes a quantity of times that the first event occurs.

In a design, the indication information indicates that the edge application server fails to be found or the edge enabler client fails to be registered.

According to a seventh aspect, a communication apparatus is provided. The apparatus may include modules/units configured to perform a third aspect or any possible implementation of a third aspect, for example, a transceiver unit and a processing unit.

The transceiver unit is configured to receive first request information from one or more terminals, where the first request information is used to request to instantiate an edge application server; the first request information includes network information, application information, and a terminal identifier; and the network information indicates a first network, the application information indicates a first application, and the terminal identifier identifies a terminal that sends the first request information; and the processing unit is configured to determine, based on the first request information, whether to instantiate the edge application server corresponding to the first application in the first network.

In a design, when determining, based on the first request information, whether to instantiate the edge application server corresponding to the first application in the first network, the processing unit is specifically configured to: when a quantity of one or more terminals reaches a first threshold, determine to instantiate the edge application server corresponding to the first application in the first network; and/or when a subscription level of the terminal identified by the terminal identifier is higher than or equal to a specified level, determine to instantiate the edge application server corresponding to the first application in the first network.

In a design, the transceiver unit is further configured to send second request information to a management system, where the second request information is used to request to instantiate the edge application server, and the second request information includes the network information and the application information.

In a design, the network information includes at least one of a network identifier and a location identifier; and the network identifier and the location identifier identify the first network, and the application information includes at least one of an application identifier and an application performance requirement.

In a design, the processing unit is further configured to obtain, from an application service provider, application installation information that is allowed to be instantiated.

In a design, the transceiver unit is further configured to send second information to the second network element or one or more terminals, where the second information indicates that the first application provides a corresponding edge application server that is successfully instantiated.

In a design, the transceiver unit is further configured to: when a quantity of one or more terminals does not reach a first threshold, send third information to the one or more terminals, where the third information indicates that the edge application server of the first application is not found in the first network; and/or send the third information to the one or more terminals when the subscription level of the terminal identified by the terminal identifier is lower than the specified level, where the third information indicates that the edge application server of the first application is not found in the first network.

According to an eighth aspect, a communication apparatus is provided. The apparatus may include modules/units configured to perform the fourth aspect or any possible implementation of the fourth aspect, for example, a transceiver unit and a processing unit.

The transceiver unit is configured to receive indication information from an edge enabler server or an edge network configuration server, where the indication information indicates that an edge application server fails to be found, or an edge enabler client fails to be registered, or an edge application server needs to be instantiated. The processing unit is configured to generate request information based on the indication information. The request information includes network information, application information, and a terminal identifier; and the network information indicates a first network, the application information indicates a first application, and the terminal identifier identifies a terminal that sends the request information. The transceiver unit is further configured to send the request information to a first network element.

In a design, the transceiver unit is further configured to: send the indication information to an application client; and receive request information from the application client.

In a design, the transceiver unit is further configured to receive second information from the first network element, where the second information indicates that an edge application server corresponding to the first application is successfully instantiated.

According to a ninth aspect, a communication apparatus is provided, including a processor and a memory. The memory is configured to store a computer program or instructions. The processor executes the computer program or the instructions in the memory, to implement the first aspect or any possible implementation of the first aspect, or the second aspect or any possible implementation of the second aspect, or the third aspect or any possible implementation of the third aspect, or the fourth aspect or any possible implementation of the fourth aspect.

The memory may be located inside the apparatus, or may be located outside the apparatus, and is connected to the apparatus.

In a possible implementation, the memory may be integrated with the processor.

In a possible implementation, the communication apparatus may further include a transceiver. The transceiver performs a receiving and sending operation of the method in the first aspect or any possible implementation of the first aspect, or performs a receiving and sending operation of the method in the second aspect or any possible implementation of the second aspect, or performs a receiving and sending operation of the method in the third aspect or any possible implementation of the third aspect, or performs a receiving and sending operation of the method in the fourth aspect or any possible implementation of the fourth aspect.

According to a tenth aspect, a chip is provided. The chip includes a logic circuit and a communication interface.

For example, the communication interface is configured to input first information, where the first information includes network information and application information, the network information indicates a first network, the application information indicates a first application, and the first information further includes information about a first event that is related to the first application and that is in the first network. The first event includes at least one of the following: an edge application server corresponding to the first application is not found in the first network, the edge enabler server corresponding to the first application is not found in the first network, and performance information of the edge application server corresponding to the first application in the first network. The logic circuit is configured to: when the first event meets a first condition, instantiate a first edge application server corresponding to the first application in the first network. For example, the logic circuit is configured to detect the first event. The first event includes at least one of the following: an edge application server corresponding to the first application is not found in the first network, the edge enabler server corresponding to the first application is not found in the first network, and performance information of the edge application server corresponding to the first application in the first network. The communication interface is configured to output the first information or indication information, where the first information includes network information and application information, and the indication information indicates that an edge application server needs to be instantiated; and the network information indicates the first network, and the application information indicates the first application.

For example, a user of the communication interface enters first request information, where the first request information is used to request to instantiate the edge application server; the first request information includes network information, application information, and a terminal identifier; and the network information indicates a first network, the application information indicates a first application, and the terminal identifier identifies a terminal that sends the first request information. The logic circuit is configured to determine, based on the first request information, whether to instantiate the edge application server corresponding to the first application in the first network.

For example, the communication interface is configured to input the indication information, where the indication information indicates that the edge application server fails to be found, or the edge enabler client fails to be registered, or the edge application server needs to be instantiated. The logic circuit is configured to generate request information based on the indication information. The request information includes network information, application information, and a terminal identifier; and the network information indicates a first network, the application information indicates a first application, and the terminal identifier identifies a terminal that sends the request information. The communication interface is further configured to output the request information. According to an eleventh aspect, this application provides a computer-readable storage medium. The computer-readable storage medium stores instructions. When the instructions are run on a computer, the computer is enabled to perform the method in the foregoing aspects.

According to a twelfth aspect, this application provides a computer program product for storing instructions. When the computer program product is run on a computer, the computer is enabled to perform the method in the foregoing aspects.

According to a thirteenth aspect, this application provides a communication system, including at least one first network element and at least one second network element, or including at least one first network element and at least one terminal.

In addition, for beneficial effects of the fifth aspect to the thirteenth aspect, refer to the beneficial effects shown in the first aspect to the fourth aspect.

### BRIEF DESCRIPTION OF DRAWINGS

FIG. 1 is an example flowchart of EEC registration;
FIG. 2 shows a network architecture according to an embodiment of this application;
FIG. 3 is an example flowchart of a method for instantiating an EAS according to an embodiment of this application;
FIG. 4 is an example flowchart of a method for instantiating an EAS according to an embodiment of this application;
FIG. 5 is an example flowchart of a method for instantiating an EAS according to an embodiment of this application;
FIG. 6A and FIG. 6B are an example flowchart of a method for instantiating an EAS according to an embodiment of this application;
FIG. 7 is a structural diagram of a communication apparatus according to an embodiment of this application; and
FIG. 8 is a block diagram of a communication apparatus according to an embodiment of this application.

### DESCRIPTION OF EMBODIMENTS

For ease of understanding, terms in embodiments of this application are first explained and described.
(1) An EAS of a first application may be an EAS that can provide a service for the first application, or may be referred to as an EAS corresponding to the first application, an EAS that corresponds to the first application, an EAS that can provide a service for the first application, an EAS that provides a service for the first application, or the like.

An EDN includes an EES and a plurality of EASs. Each EDN has a specific service range. The EES may be a control network element or a management network element in an MEC node. In an MEC architecture of the European telecommunication standard institute (European telecommunication standard institute, ETSI), one EDN may also be referred to as the MEC node, an MEC site, or the like. The MEC node includes an MEC platform (MEC platform, MEP) and an MEC application (application). The EES and the MEC have similar functions, and the EAS and the MEC application have similar functions.

An edge configuration server (edge configuration server, ECS) may be a global management network element, and maintain information of each EDN, including a service range, an EES address, and the like. It should be noted that in some standard protocols, such as technical specification (technical specification, TS) 23.501, TS23.502, and the like, the foregoing EES, EAS, ECS, MEP, and the like may be referred to as application function (application function, AF) network elements.

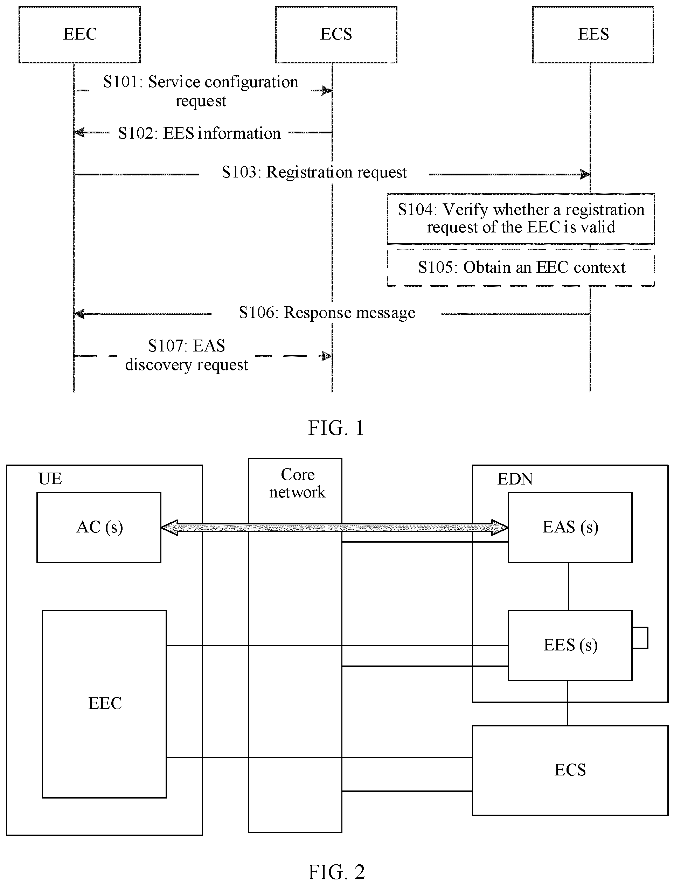

FIG. 1 is a flowchart of registering an EEC with an EES, and the following operations may be included.

S101: An EEC sends a service configuration request (service provisioning request) to an ECS. The service configuration request may include application information that UE wants to access, for example, an application identifier, an application performance requirement, and/or the like. S102: The ECS sends information about an EES to the EEC.

The ECS may search for an EES that meets an application that the UE wants to access. For example, the ECS may search for, based on the application identifier, an EDN in which a corresponding EAS is deployed. If the ECS finds the EDN, the ECS may send the information about the EES in the found EDN to the EEC.

S103: The EEC sends a registration request to the EES.

The registration request may carry an EEC identifier, a security certificate, the application information that the UE wants to access, such as the application identifier, the application performance requirement, and the like, and an EEC context identifier.

S104: The EES verifies whether the registration request of the EEC is valid.

The EES may verify whether the EEC identifier is consistent with the security certificate. If the EEC identifier is consistent with the security certificate, it may be considered that the registration request is valid; or if the EEC identifier is inconsistent with the security certificate, it may be considered that the registration request is invalid.

In addition, the EES may further determine whether the deployed EAS meets an access requirement of the UE. For example, the EES may determine whether an EAS of an application requested by the UE is deployed. Alternatively, the EES may determine whether the deployed EAS meets the requirement of the UE, for example, may determine whether a bandwidth, a delay, and the like of the deployed EAS meet the requirement of the UE.

Optionally, the following operation S105 may be further performed.

S105: The EES obtains an EEC context based on an EEC context identifier.

The EES may determine, based on the EEC context identifier, the EES with which the UE has registered, and obtain the EEC context from the EES with which the UE has registered.

S106: The EES sends a response message to the EEC, to notify the EEC of whether registration succeeds.

After the EEC registration succeeds, the following operation S107 may be further performed. S107: The EEC sends an EAS discovery request to the EES.

The EAS discovery request may include application information. The EES may search for, based on the application information, the EAS that meets the application that the UE wants to access. If the EES is found, the EES may send information about the found EAS to the EEC.

In S104, if the EES detects that the deployed EAS does not meet the application information that the UE wants to access, or after the EEC sends the registration request to the EES in S103, the EES finds that the EAS is not instantiated in the current EDN, or after the EEC sends the EAS discovery request to the EES in S107, the EES does not find the EAS that meets the application information that the UE wants to access, and the EES may dynamically trigger one EAS to meet the request of the EEC. However, how to dynamically instantiate the EAS is not defined.

Embodiments of this application provide a method for instantiating an EAS. In the method, when the deployed EAS does not meet the application information that the UE wants to access or the EAS is not instantiated in the current EDN, the EAS may be instantiated to meet the request of the EEC. FIG. 2 shows a communication system to which a technical solution provided in embodiments of this application is applicable, and shows an edge application server and an edge enabler server on an edge data network side, and an application client and an edge enabler client on a terminal device side.

An EDN corresponds to one data network deployed at an edge, and may be a local data network (local DN) or a local area data network (local area data network, LADN). The edge data network includes an edge enabler function, which may use a data network access identifier (data network access identifier, DNAI) and a data network name (data network name, DNN) identifier or a data network name and a data network service area (service area) identifier. Alternatively, it may be understood that the edge data network may be considered as a data center deployed locally relative to a central cloud. The edge data network may be identified by using the DNAI, and one edge data network may include a plurality of local data networks (local DN).

The EAS is a server application program deployed in the edge data network, and may also be referred to as an application instance, an edge application instance, an MEC application (server), an EAS function, or the like. For example, applications such as social media software, augmented reality (augmented reality, AR), and virtual reality (virtual reality, VR) are deployed and run on the application instance (instance) of the EDN. One or more EASs may be deployed for one application in one or more EDNs, and EASs deployed and running in different EDNs may be considered as different EASs of one application. Different EASs of one application may share one domain name. Different EASs of one application may use one anycast IP address or different IP addresses. The edge application server EAS may further include an application context of an application corresponding to the EAS. Optionally, the application context may further include a context of one or more application users who use the application in the EAS, for example, running status information related to the one or more application users who use the application, or a transaction identifier of subscription of the EAS to the one or more application users. Optionally, the application context may also include a subscription context, for example, a subscription transaction identifier, of one or more application users who use the application in the EAS and a core network.

The EES is deployed in the EDN, and may provide an edge computing enabler service for an application instance deployed in the EDN, namely, the foregoing EAS, to better support deployment and running of an application in the MEC. The EES may support registration of the EAS, authentication and authorization on a terminal device (user equipment, UE), or authentication and authorization on an edge enabler client, and provide information about an application instance, such as IP address information, for the UE. Generally, one EAS may be registered with one EES, or information about one EAS may be configured on one EES through a management system. In this case, the EES is referred to as an EES associated with the EAS, and the EES may control (manage) registration or the EAS configured on the EES or the serving EES of the EAS. The EES further supports obtaining information about the application instance, including an identifier of the application instance and address information (such as the IP address information) of the application instance, and further sends the information about the application instance, such as an identifier of the application instance, to an edge data network configuration server (edge configuration server, ECS). The ECS is responsible for configuration of the EDN, for example, providing information about the EES for the UE, providing information about the EAS for the UE, interacting with a DNS of an application, to obtain information about the EAS, and the like. Further, the ECS may further obtain the information about the application instance and the information about the IP address from another functional entity and store the information. The MEC architecture model shown in FIG. 2 further shows the foregoing ECS.

An AC is a client program of an application on a terminal device side, and is a peer entity of the EAS on the terminal device side. The application client is used by an application user (user) to obtain an application service from an application server. The application client may connect to an application server on the cloud to obtain the application service, or may connect to an EAS that is deployed and runs in one or more EDNs to obtain the application service.

The EEC is a peer entity of the EES on the terminal device side. The EEC is configured to register information about the EEC and information about the application client AC with the EES, perform security authentication and authentication, obtain information about the EAS including address information (such as the IP address) of the EAS from the EES, and provide an edge computing enabler capability for the application client. For example, an EEC discovery service may return the IP address of the EAS to the application client.

As shown in FIG. 2, a communication connection is established between the application client AC on the terminal device side and the edge application server EAS; and a communication connection is established between the edge enabler client EEC on the terminal device side and the edge enabler server EES. After signing a service agreement with an application provider, an application user may log in to the application client AC deployed on the terminal device to use the application, and exchange transmission application data (application data) through the communication connection between the application client AC and the EAS. The application user may further obtain a service provided by the edge enabler server EES from the edge enabler client EEC in a manner of an application programming interface (application programming interface, API) through the application client AC.

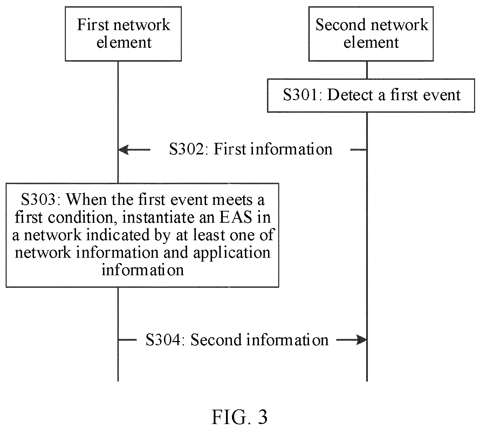

FIG. 3 is an example flowchart of a method for instantiating an EAS according to an embodiment of this application. The method may include the following operations.

S301: A second network element detects a first event.

The second network element may be an EES or an ECS. It should be noted that the ECS may be one network element deployed in a centralized manner, and is not necessarily deployed in an EDN network. A deployment location of the ECS is not specifically limited in embodiments of this application. The first event may include at least one of the following.
1. An available EAS corresponding to a first application is not found in a first network.

In S104, the EES may determine whether the deployed EAS meets the first application that UE wants to access. When the EES determines that the EAS of the first application that the UE wants to access does not exist in the deployed EAS, it may be considered that the available EAS corresponding to the first application is not found in the first network. In S107, the EES may search for, based on application information, the EAS that meets the first application that the UE wants to access. If the EAS is not found, it may be considered that the available EAS corresponding to the first application is not found in the first network. For ease of description, this application may be described as that the available EAS is not found. Details are not described below again.

Optionally, when a delay and a bandwidth of the EAS do not meet the first application that the UE wants to access, it may also be considered that the available EAS corresponding to the first application is not found in the first network. For example, if the first application that the UE wants to access has a high requirement on the delay, an EAS that corresponds to the first application and that has been deployed in the first network has a low requirement on the delay, and the delay is great during service processing, it may be considered that the EAS in the first network does not meet the first application that the UE wants to access.

2. An available EES corresponding to a first application is not found in a first network.

In S102, the ECS may search for an EDN or an EES on which an EAS meeting the first application that the UE wants to access is deployed. If the ECS does not find the EDN or the EES, it may be considered that the available EES corresponding to the first application is not found, or the ECS may be considered that the available EAS corresponding to the first application is not found. For ease of description, this application may be described as that the available EES is not found. Details are not described below again.

3. Performance information of the EAS corresponding to the first application in the first network. The EES or the ECS may determine EAS performance corresponding to the first application in the first network, for example, load (which may include one or more of a memory, a CPU, a bandwidth, a quantity of connections, a delay, and the like) of the EAS, whether the EAS is online, and the like. Optionally, when the EES or the ECS determines that the load of the EAS does not exceed a first value and the EAS is online, the performance information of the EAS may not be reported.

When the EES or ECS determines that the load of the EAS is greater than or equal to the first value, or the EAS breaks down, the performance information of the EAS may be reported. The first value may be determined based on an empirical value, for example, may be 50% of the bandwidth of the EAS, 80% of the bandwidth, or the like. This is not specifically limited in this application. For ease of description, the first value may be described as EAS performance in this application, and details are not described below again.

S302: The second network element sends first information to a first network element, and correspondingly, the first network element receives the first information from the second network element.

The first network element may be an ASP or a management system. The first information may include network information and application information. The network information may indicate the first network, and the application information may indicate the first application. The network information may include at least one of a network identifier, a location identifier, an EES identifier, or an ECS identifier. The network identifier may indicate one EDN network, for example, may be a DNAI, a DNN, or the like. The location identifier may indicate one node in the EDN network, the ECS identifier may identify one ECS, and the EES identifier may identify one EES. The application information may include an application identifier and an application performance requirement. The application identifier may indicate one application, for example, an EAS ID, an FQDN, or the like. The application performance requirement may indicate a performance requirement of an application indicated by the application identifier, for example, a bandwidth requirement, a delay requirement, and the like. The first information may further include information about a first event that is related to the first application and that is in the first network. The second network element may send the first information to the first network element based on the detected first event. In a possible implementation, the EES or the ECS may send the first information to the ASP or the management system each time after detecting the first event. For example, when the ECS does not find an available EES in S102, the ECS may send the first information to the ASP or the management system. Alternatively, the EES or the ECS may send the first information to the ASP or the management system after detecting the first event for a plurality of times. When the EES or the ECS sends the first information after detecting the first event for a plurality of times, the first information may further carry a quantity of times that the first event occurs. For example, the quantity of times that the ECS does not find an available EES, the quantity of times that the EES does not find an available EAS, the quantity of times that the EAS is overloaded, the EAS breaks down, or the like. Specifically, that the EES or the ECS may send the first information after detecting the first event for a plurality of times may be: the quantity of times that the EES or the ECS detects the first event meets a preset quantity of times, for example, 10. For example, when detecting that the available EES is not found for 10 times, the EES or the ECS sends the first information to the ASP or the management system. Alternatively, the EES or the ECS may detect the first event for a plurality of times in a specified periodicity, and send the first information to the ASP or the management system after the specified periodicity expires.

In a possible implementation, the first network element may subscribe to the first event or the first information. For example, the management system or the ASP may send a subscription request to the EES or the ECS, and the subscription request may be used to subscribe to the first information or the first event. In this way, the first network element subscribes to the first information or the first event, so that the first network element may avoid missing the first information or the first event.

S303: The first network element determines, when the first event meets a first condition, to instantiate, in a first network, an EAS corresponding to a first application.

The first condition may include at least one of the following:
Condition 1: A quantity of times that the available EAS is not found in the first duration is greater than or equal to a first threshold.

The first duration may be determined in advance based on an empirical value, for example, 10s or 20s. The first threshold may be determined in advance based on an empirical value, for example, five or six times. This is not specifically limited in this application. Optionally, the ASP or the management system may receive the first information for a plurality of times. If a quantity of times that the available EAS is not found in the first duration is greater than or equal to the first threshold, it may be considered that many UEs want to access the first application or one UE wants to access the first application for a plurality of times, but an EAS that can provide a service for the first application is not instantiated in the first network. In this case, the management system or the ASP may determine that it is necessary to instantiate, in the first network, the EAS that provides the service for the first application.

Optionally, if the EES sends the first information after detecting the first event for a plurality of times, the first information may include a quantity of times that the first event occurs. In this case, the condition 1 may also include that the quantity of times that the available EAS is not found is greater than or equal to a second value. The second value may be the same as or different from the first threshold. This is not specifically limited in this application.

Condition 2: A quantity of times that the available EES is not found in the second duration is greater than or equal to a second threshold.

The second duration may be determined in advance based on an empirical value, for example, 8s or 10s. The second threshold may be determined in advance based on an empirical value, for example, 10 times or 15 times. This is not specifically limited in this application. The second duration may be the same as or different from the first duration, and the first threshold may be the same as or different from the second threshold. This is not specifically limited in this application. Optionally, the ASP or the management system may receive the first information for a plurality of times. If a quantity of times that the available EES is not found in the second duration is greater than or equal to the second threshold, it may be considered that many UEs want to access the first application or a same UE wants to access the first application for a plurality of times. However, because the first network has not instantiated an EAS that can provide a service for the first application, an EES on which the EAS that can provide the service for the first application is deployed cannot be found. In this case, the management system or the ASP may determine that it is necessary to instantiate, in the first network, the EAS that can provide the service for the first application.

Optionally, if the ECS sends the first information after detecting the first event for a plurality of times, the first information may include a quantity of times that the first event occurs. In this case, the condition 2 may also include that the quantity of times that the available EES is not found is greater than or equal to a third value. The third value may be the same as or different from the second threshold. This is not specifically limited in this application.

Condition 3: Load of the EAS is greater than or equal to the third threshold.

If the EAS performance in the first information includes that the load of the EAS is greater than or equal to the third threshold, it may be considered that the EAS that can provide the service for the first application in the first network cannot meet a requirement of the UE. In this case, the ASP or the management system determines that it is necessary to instantiate, in the first network, the EAS that can provide the service for the first application. The third threshold may be 50%, 85%, or the like of the bandwidth of the EAS. This is not specifically limited in this application.

Condition 4: EAS breakdown.

If the EAS performance in the first information includes EAS breakdown, to be specific, the EAS is offline and cannot provide a service, the ASP or the management system determines that it is necessary to instantiate, in the first network, the EAS that can provide the service for the first application. Optionally, the EAS breakdown may be: all EASs in the network break down, or a part of EASs in the network break down. For example, the EAS breakdown may be: one EAS in the first network breaks down, or greater than or equal to half of EASs in the first network break down. This is not specifically limited in this application.

In an example, the management system may obtain, from the ASP in advance, application installation information that allows to be instantiated. In other words, the management system may obtain authorization of the application that allows to be instantiated. The application installation information may include information such as an application identifier and an application description file. If the management system obtains the authorization of the application that allows to be instantiated, the EES or the ECS may send the first information to the management system. When the first event meets the first condition, the management system may instantiate, in the first network, the EAS corresponding to the first application.

In another example, if the management system does not obtain a list of applications that allow to be instantiated and the application installation information, the EES or the ECS may send the first information to the ASP. When the first event meets the first condition, the ASP sends an EAS instantiation request to the management system, to request the management system to instantiate, in the first network, the EAS that can provide the service for the first application.

The instantiating the EAS corresponding to the first application may include: allocating, to the EAS, a virtual machine resource, a memory, a CPU, a bandwidth, and the like that are required by the application, or deploying, in the first network EDN, a server corresponding to the first application. An operation of instantiating the EAS is not specifically limited in this application.

S304: The first network element sends second information to the second network element.

The second information may indicate that the EAS of the first application is successfully instantiated.

In a possible implementation, the management system may send the second information to the EES or the ECS. If the EES or the ECS sends the first information to the management system, after the EAS is instantiated, the management system may send the second information to the EES or the ECS.

Alternatively, the management system may send the second information to the ASP, and then the ASP sends the second information to the EES or the ECS. If the EES or the ECS sends the first information to the ASP, after the EAS is instantiated, the management system may send the second information to the ASP, and the ASP may send the second information to the EES or the ECS.

Optionally, the EES may receive the second information from the ASP or the management system, and may send the information about the instantiated EAS corresponding to the first application to the EEC. Alternatively, because the EAS corresponding to the first application has been deployed on the EES, the ECS may send EES information to the EEC, and after receiving the EES information, the EEC may send an EAS discovery request to the EES, for example, S107.

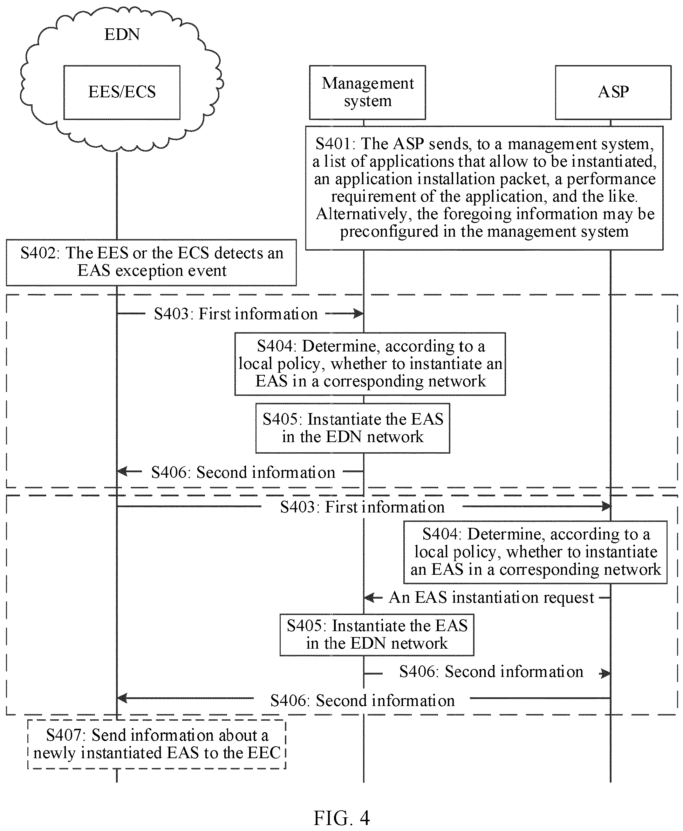

The following describes in detail, based on FIG. 4, a method for instantiating an EAS according to an embodiment of this application.

FIG. 4 is an example flowchart of still another method for instantiating an EAS according to an embodiment of this application. The method may include the following operations.

Optionally, S401: An ASP sends, to a management system, a list of applications that allow to be instantiated, application installation information, a performance requirement of the application, and the like. Alternatively, the foregoing information may be preconfigured in the management system. The management system may store the application installation information that allows to be instantiated, the performance requirement of the application, and the like.

S402: An EES or an ECS detects an EAS exception event.

The EES detects the EAS exception event, which may include: The EES receives an EAS discovery request from the EEC, but the EES does not find an EAS that meets a condition, or the EES receives a registration request from the EEC, but the EES does not find an EAS that meets a condition. The condition meeting may be meeting a requirement of an application that UE wants to access. Alternatively, the EES may monitor a performance change of the EAS. For example, whether the EAS is overloaded or breaks down.

The ECS detects the EAS exception event, which may include: The ECS receives an EES discovery request from the EES, but the ECS does not find the EES that meets the condition, or the ECS receives a service configuration request from the EEC, but the ECS does not find the EES that meets the condition. The EES that meets the condition may be: an EAS that meets a requirement of an application that the UE wants to access is deployed in the EES.

S403: The EES or the ECS sends first information to a management system or an ASP, and sends the detected EAS exception event to the management system or the ASP. Alternatively, performance of the EAS may be carried in the first information and sent to the management system or the ASP.

If S401 is performed, the EES or the ECS may directly send the first information to the management system.

In an example, if the EES or the ECS may detect the EAS exception event and report the EAS exception event, the first information may not include a quantity of times that the EAS exception event occurs, or a quantity of times that the EAS exception event occurs may be 1 by default.

In another example, if the EES or the ECS reports the EAS exception event only when detecting a plurality of EAS exception events, the first information includes a quantity of times that the EAS exception event occurs.

S404: The ASP or the management system determines, according to a local policy, whether to instantiate the EAS in a corresponding network.

For example, the ASP or the management system may determine whether the EAS exception event or the EAS performance meets the first condition. For details, refer to related descriptions in the first condition, and details are not described herein again.

Optionally, if the EES or the ECS sends the first information to the ASP, the ASP may send the EAS instantiation request to the management system when determining that the EAS exception event or the EAS performance meets the first condition. The EAS instantiation request may include application information and network information, and is used to determine a network on which an EAS of an application is deployed.

S405: The management system instantiates the EAS in an EDN network.

The management system may instantiate, in an EDN network indicated by the network information based on the application information and the network information, the EAS of the application indicated by the application information. The management system may allocate, to the EAS, a virtual machine resource, a memory, a CPU, a bandwidth, and the like that are required by the application. An operation of instantiating the EAS is not specifically limited in this application.

For example, the management system may first send a message to a management network element of an edge network, for example, an MEC platform management (MEC Platform management, MEPM), and then the management network element of the edge network interacts with the EES or the MEP to instantiate the EAS.

S406: The management system sends second information to the EES or the ECS, to notify the EES or the ECS that the EAS is successfully instantiated.

Optionally, the management system first notifies the ASP that the EAS instantiation succeeds, and then the ASP notifies the EES or the ECS that the EAS instantiation succeeds. It should be noted that a procedure of notifying the EES or the ECS that the EAS is successfully instantiated shown in FIG. 4 is merely an example.

Optionally, S407 may be further performed.

S407: The EES may send information about the newly instantiated EAS to the EEC; or because a new EAS is deployed on the EES, the ECS may send EES information to the EEC, and after receiving the EES information, the EEC may send an EAS discovery request to the EES.

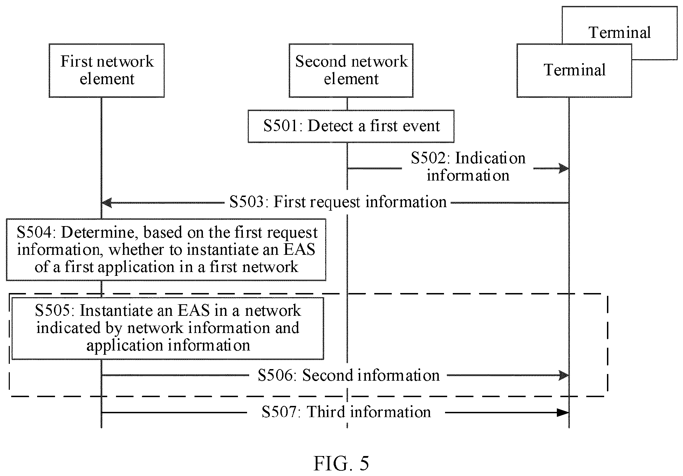

Based on the foregoing solution, an EES or ECS detection mechanism is defined, to report an event to the management system. The management system may determine, based on the reported event, whether to dynamically instantiate the EAS, and the management system deploys the EAS as required. This may significantly improve efficiency of operation and maintenance management. Refer to FIG. 5. This application provides another method for instantiating an EAS. FIG. 5 is an example flowchart of still another method for instantiating an EAS according to an embodiment of this application. The method may include the following operations.

S501: A second network element detects a first event.

The second network element may be an EES or an ECS. For the first event, refer to related descriptions in the method embodiment shown in FIG. 3. Details are not described herein again.

S502: The second network element sends indication information to one or more terminals.

The one or more terminals may be an EEC functional module in the terminal.

The EES may send the indication information to the EEC when an available EAS is not found, or an EAS is overloaded or breaks down. The ECS may send the indication information to the EEC when an available EES is not found, or an EAS is overloaded or breaks down.

The indication information may indicate that EAS search fails or EES search fails, or may indicate that EEC registration fails, or the indication information may explicitly indicate that a first application that UE wants to access needs to dynamically instantiate the EAS, or the indication information indicates that performance of the EAS deployed in a current EDN cannot meet a performance requirement requested by the UE.

S503: The one or more terminals send first request information to the first network element.

Optionally, the EEC may send the indication information to an AC. The first network element may be an ASP, a management system, or a user app LCM proxy (user app LCM proxy, UEAPPLCM proxy). The foregoing UEAPPLCM proxy may be used by a user to request an entity of services such as application-related instantiation and termination.

The first request information may include network information, application information, and a terminal identifier. The terminal identifier may be a subscription permanent identifier (subscription permanent identifier, SUPI), a generic public subscription identifier (generic public subscription identifier, GPSI), or the like, and may be used to determine which UE wants to access a first application.

S504: The first network element determines, based on the first request information, whether to instantiate an EAS of a first application in a first network.

The first network element determines, based on a local policy or configuration, whether to instantiate the EAS of the first application in the first network. For example, if a quantity of UEs that want to access the first application reaches a first threshold, the EAS that instantiates the first application in the first network may be determined. The quantity of UEs may be determined through a quantity of terminal identifiers received by the first network element. If the quantity of terminal identifiers reaches the first threshold, it may be considered that the quantity of UEs that want to access the first application reaches the first threshold. For another example, if the first network element determines, based on the quantity of first requests, that a second threshold is reached, it may be considered that a requirement for accessing the first application is large, and therefore, the first network element determines the EAS that instantiates the first application in the first network. The first threshold and the second threshold may be determined in advance based on an empirical value, for example, 1 or 5. This is not specifically limited in this application.

Alternatively, if a subscription level of the terminal identified by the terminal identifier is higher than or equal to a specified level, the EAS that instantiates the first application in the first network may be determined. The first request information may include the subscription level of the terminal identified by the terminal identifier. Alternatively, the first network element may store a correspondence between the terminal identifier and the subscription level, and the first network element may determine, in the stored correspondence, whether a subscription level corresponding to the terminal identifier included in the first request information is higher than or equal to the specified level.

In an example, the management system may obtain, from the ASP in advance, application installation information that allows to be instantiated. In other words, the management system may obtain authorization of the application that allows to be instantiated. The application installation information may include information such as an application identifier and an application description file. If the management system obtains the authorization of the application that allows to be instantiated, the terminal may send the first request information to the management system. The management system may determine, based on the first request information, whether to instantiate the EAS of the first application in the first network. If the management system determines to instantiate the EAS of the first application in the first network, S505 may be performed; otherwise, the management system performs S507.

In another example, if the management system does not obtain the application installation information that allows to be instantiated, the terminal may send the first request information to the ASP or the UEAPPLECM proxy. The ASP or the UEAPPLECM proxy may determine, based on the first request information, whether to instantiate the EAS of the first application in the first network. If the ASP or the UEAPPLCM proxy determines to instantiate the EAS of the first application in the first network, the ASP or the UEAPPLCM proxy may send the second request information to the management system. The second request information may include the application information and the network information. The management system instantiates, in the first network, the EAS that can provide a service for the first application, to be specific, performs S505. If the ASP or the UEAPPLCM proxy determines not to instantiate the EAS of the first application in the first network, the ASP or the UEAPPLCM proxy performs S507.

S505: The first network element instantiates an EAS that can provide a service for the first application in the first network.

For an operation that the first network element instantiates the EAS, refer to the foregoing related descriptions. Details are not described herein again.

S506: The first network element sends second information to the one or more terminals.

The second information indicates that the EAS is successfully instantiated. Optionally, the management system, the ASP, or the UEAPPLCMA proxy may first notify the EEC that the EAS is successfully instantiated, and then the EEC notifies the AC that the EAS is successfully instantiated.

In an example, if the one or more terminals send the first request information to the management system, the management system may send the second information to the one or more terminals after instantiating the EAS.

In another example, if the one or more terminals send the first request information to the ASP or the UEAPPLCM proxy, after instantiating the EAS, the management system may send the second information to the ASP or the UEAPPLCM proxy, and the ASP or the UEAPPLCM proxy sends the second information to the one or more terminals.

S507: The first network element sends third information to the one or more terminals.

The third information may indicate that the EAS of the first application is not found in the first network.

It should be noted that if the one or more terminals send the first request information to the management system, the management system sends the third information to the one or more terminals. If the one or more terminals send the first request information to the ASP or the UEAPPLCM proxy, the ASP or the UEAPPLCM proxy sends the third information to the one or more terminals.

Based on the foregoing solution, the management system may instantiate the EAS based on a requirement of the UE, so that differentiated service experience may be provided for a user, and efficiency of operation and maintenance management may be improved.

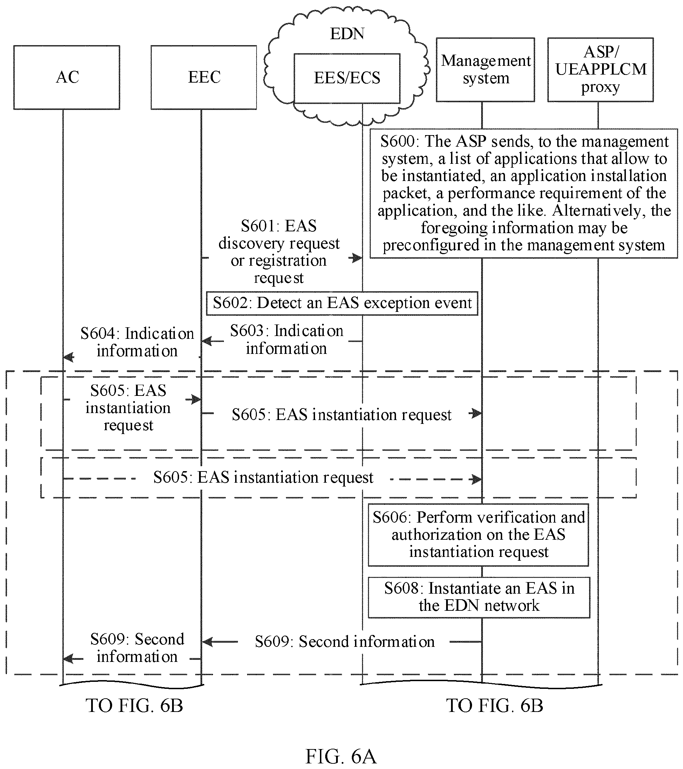

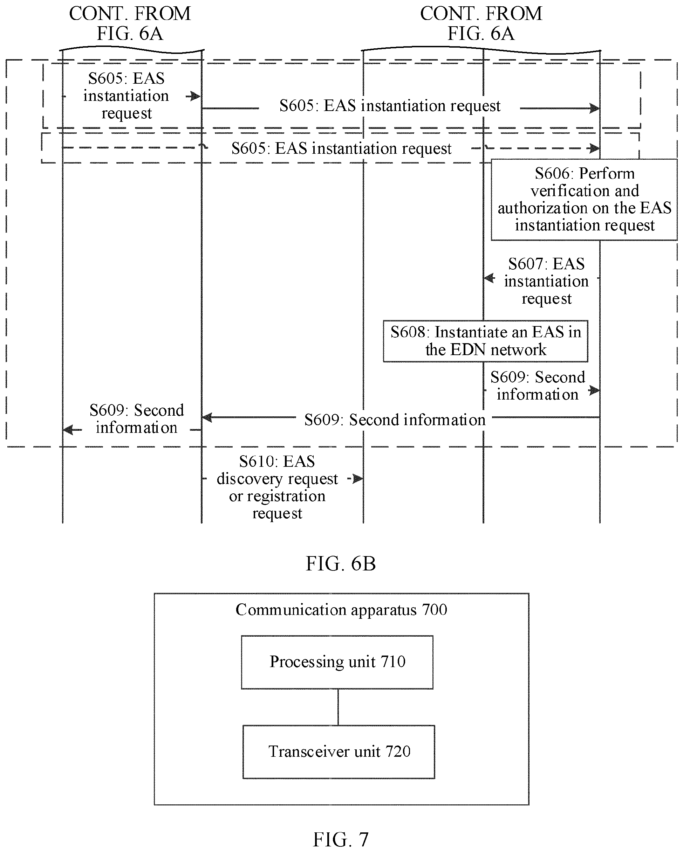

The following describes in detail, through FIG. 6A and FIG. 6B, a method for instantiating an EAS according to an embodiment of this application.

FIG. 6A and FIG. 6B are an example flowchart of still another method for instantiating an EAS according to an embodiment of this application. The method may include the following operations. Optionally, S600 is the same as S401.

S601: An EEC sends an EAS discovery request or a registration request to an EES.

The EAS discovery request or the registration request may include application information.

Alternatively, the EEC sends a service configuration request to an ECS, where the service configuration request includes the application information.

S602 is the same as S402.

S603: The EES or an ECS sends indication information to the EEC.

The indication information may indicate that the EAS needs to be instantiated. For details, refer to related descriptions in the method embodiment shown in FIG. 5. Details are not described herein again.

Optionally, the EEC may perform the following operation S604.

S604: The EEC sends the indication information to an AC.

S605: The EEC sends an EAS instantiation request to a UEAPPLCM proxy/ASP/management system.

The EAS instantiation request may include a network identifier or a location identifier, application information, a UE identifier, and the like. For details, refer to related descriptions in the method embodiment shown in FIG. 3 to FIG. 5. Details are not described herein again.

In an example, the AC may first send the EAS instantiation request to the EEC, and then the EEC sends the EAS instantiation request to the ASP or the UEAPPLCM proxy. The ASP or UEAPPLCM proxy sends the EAS instantiation request to the management system. The EAS instantiation request may include network information and application information, and may not include a terminal identifier.

In another example, the AC sends the EAS instantiation request to the ASP or the user app LCM proxy.

In yet another example, if the foregoing operation S600 has been performed, the AC/EEC may send the EAS instantiation request to the management system.

S606: The UEAPPLCM proxy/ASP/management system performs verification and authorization on the EAS instantiation request.

For example, whether the request is proper is determined based on a local policy or configuration.

For details, refer to related descriptions in the method embodiment shown in FIG. 5. Details are not described herein again.

Optionally, if the AC/EEC sends the EAS instantiation request to the ASP or the UEAPPLCM proxy, the ASP or the UEAPPLCM proxy may perform verification and authorization on the EAS instantiation request. After the verification succeeds, the following operation S607 may be performed.

S607: The UEAPPLCM proxy/ASP sends, to the management system, the EAS instantiation request that carries network information and application information.

If the AC/EEC sends the EAS instantiation request to the management system, the management system may perform verification on the EAS instantiation request. The management system may include network elements such as an operation support system (operation support system, OSS), an MEC orchestrator (MEC orchestrator, MEO), and an MEPM.

S608 is the same as S405.

S609: The UEAPPLCM proxy/ASP/management system sends second information to the AC/EEC, to notify the AC/EEC that the EAS is successfully instantiated.

In an example, the management system may notify the UEAPPLCM proxy/ASP that the EAS is successfully instantiated, and then the UEAPPLCM proxy/ASP notifies the EEC/AC that the EAS is successfully instantiated.

In another example, the EEC may be first notified that the EAS is successfully instantiated, and the EEC notifies the AC that the EAS is successfully instantiated, or the AC may be first notified that the EAS is successfully instantiated, and the AC notifies the EEC that the EAS is successfully instantiated.

It should be noted that a procedure of notifying the AC/EEC that the EAS is successfully instantiated shown in FIG. 6A and FIG. 6B is merely an example.

Optionally, the following operation S610 may be performed.

S610: The EEC may resend the request in S601.

Based on the foregoing solution, UE sends a dynamic EAS instantiation request to the UEAPPLCM proxy, the ASP, or the management system, to provide differentiated service experience for a user. The management system deploys the EAS as required. This improves efficiency of operation and maintenance management.

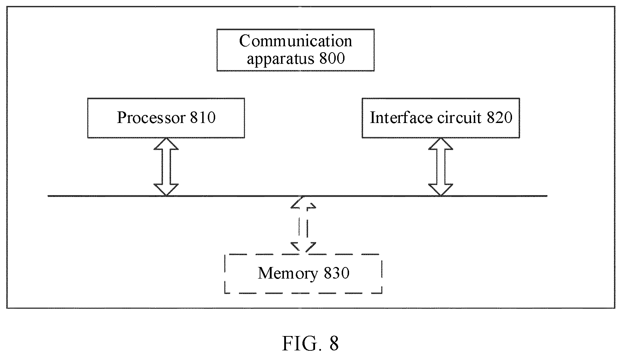

FIG. 7 and FIG. 8 are schematic diagrams of structures of possible communication apparatuses according to an embodiment of this application. These communication apparatuses may be configured to implement functions of the first network element, the second network element, or the terminal in the foregoing method embodiments, and therefore may also implement beneficial effects of the foregoing method embodiments.

As shown in FIG. 7, a communication apparatus 700 includes a processing unit 710 and a transceiver unit 720. The communication apparatus 700 is configured to implement functions of the first network element, the second network element, or the terminal in the method embodiment shown in FIG. 3 or FIG. 5.

When the communication apparatus 700 is configured to implement a function of the first network element in the method embodiment shown in FIG. 3, the transceiver unit is configured to receive first information from a second network element, where the first information includes network information and application information, the network information indicates a first network, the application information indicates a first application, and the first information further includes information about a first event that is related to the first application and that is in the first network; and the first event includes at least one of the following: an edge application server corresponding to the first application is not found in the first network, the edge enabler server corresponding to the first application is not found in the first network, and performance information of the edge application server corresponding to the first application in the first network. The processing unit is configured to determine, when the first event meets a first condition, to instantiate a first edge application server corresponding to the first application in the first network.

When the communication apparatus 700 is configured to implement a function of the first network element in the method embodiment shown in FIG. 5, the transceiver unit is configured to receive first request information from one or more terminals, where the first request information is used to request to instantiate an edge application server; the first request information includes network information, application information, and a terminal identifier; and the network information indicates a first network, the application information indicates a first application, and the terminal identifier identifies a terminal that sends the first request information; and the processing unit is configured to determine, based on the first request information, whether to instantiate the edge application server corresponding to the first application in the first network.

When the communication apparatus 700 is configured to implement a function of the second network element in the method embodiment shown in FIG. 3, the processing unit is configured to detect a first event, where the first event includes at least one of the following: an edge application server corresponding to the first application is not found in the first network, the edge enabler server corresponding to the first application is not found in the first network, and performance information of the edge application server corresponding to the first application in the first network; the transceiver unit is configured to send first information to a first network element or sending indication information to one or more terminals based on the detected first event; the first information includes network information and application information, and the indication information indicates that an edge application server needs to be instantiated; and the network information indicates the first network, and the application information indicates the first application.

When the communication apparatus 700 is configured to implement a function of the terminal in the method embodiment shown in FIG. 5, the transceiver unit is configured to receive indication information from an edge enabler server or an edge network configuration server, where the indication information indicates that the edge application server fails to be found, or an edge enabler client fails to be registered, or the edge application server needs to be instantiated. The processing unit is configured to generate request information based on the indication information. The request information includes network information, application information, and a terminal identifier; and the network information indicates a first network, the application information indicates a first application, and the terminal identifier identifies a terminal that sends the request information. The transceiver unit is further configured to send the request information to a first network element.

For more detailed descriptions of the processing unit 710 and the transceiver unit 720, directly refer to related descriptions in the method embodiment shown in FIG. 3 or FIG. 4. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions to be executed by the processor 810, store input data required for running the instructions by the processor 810, or store data generated after the processor 810 runs the instructions.

When the communication apparatus 800 is configured to implement the method shown in FIG. 3 or FIG. 5, the processor 810 is configured to implement a function of the processing unit 710, and the interface circuit 820 is configured to implement a function of the transceiver unit 720. When the communication apparatus is a chip used in a terminal, the chip in the terminal implements functions of the terminal in the foregoing method embodiments. The terminal chip receives information from another module (for example, a radio frequency module or an antenna) in the terminal, where the information is sent by the first network element to the terminal; or the terminal chip sends information to another module (for example, a radio frequency module or an antenna) in the terminal, where the information is sent by the terminal to the first network element. When the communication apparatus is a module applied to the first network element, the first network element module implements a function of the first network element in the foregoing method embodiments. The first network element module receives information from another module (such as a radio frequency module or an antenna) in the first network element, where the information is sent by the terminal or the second network element to the first network element; or the first network element module sends information to another module (such as a radio frequency module or an antenna) in the first network element, where the information is sent by the first network element to the terminal or the second network element.

When the communication apparatus is a module applied to the second network element, the second network element module implements a function of the second network element in the foregoing method embodiments. The second network element module receives information from another module (such as a radio frequency module or an antenna) in the second network element, where the information is sent by the first network element to the second network element; or the first network element module sends information to another module (such as a radio frequency module or an antenna) in the first network element, where the information is sent by the second network element to the first network element.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. **In** addition, the ASIC may be located in a first network element, a second network element, or a terminal. Certainly, the processor and the storage medium may exist in the first network element, the second network element, or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or nonvolatile storage medium, or may include two types of storage media: a volatile storage medium and a non-volatile storage medium.

In this application, at least one means one or more, and a plurality of means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A method for instantiating an edge application server, comprising:
receiving, by a first network element or a chip, first information from a second network element, wherein the first information comprises network information and application information, the network information indicates a first network, the application information indicates a first application, and the first information further comprises a quantity of times that a first event occurs; and the first event is that an edge application server corresponding to the first application is not found in the first network; and
determining, by the first network element or the chip when the first event meets a first condition, to instantiate a first edge application server corresponding to the first application in the first network.

2. The method according to claim 1, wherein the first condition is that the quantity of times that the first event occurs is greater than or equal to a second value.

3. The method according to claim 1 or 2, wherein the first network element is an application service provider, and the method further comprises:
sending, by the first network element, an edge application server instantiation request to a management system, wherein the edge application server instantiation request is used to instantiate the first edge application server, and the edge application server instantiation request comprises the network information and the application information.

4. The method according to any one of claims 1 to 3, further comprising:
sending, by the first network element, a subscription request to the second network element, wherein the subscription request is used to subscribe to the first information.

5. The method according to any one of claims 1 to 4, wherein the network information is a location identifier.

6. The method according to any one of claims 1 to 4, wherein the network information comprises at least one of a network identifier, an edge enabler server identifier, or an edge configuration server identifier.

7. The method according to any one of claims 1 to 6, further comprising:
sending, by the second network element, the first information to the first network element.

8. The method according to claim 7, further comprising:
detecting, by the second network element, the first event.

9. The method according to claim 3, further comprising:
receiving, by the management system, the edge application server instantiation request from the first network element; and
instantiating the first edge application server

10. A method for instantiating an edge application server, comprising:
detecting, by a second network element or a chip, a first event, wherein the first event is that an edge application server corresponding to a first application is not found in a first network; and
sending, by the second network element and based on the detected first event, first information to a first network element, wherein the first information comprises network information and application information, the network information indicates the first network, the application information indicates the first application, and the first information further comprises a quantity of times that the first event occurs.

11. The method according to claim 10, wherein the first information is for determining to instantiate a first edge application server corresponding to the first application in the first network.

12. The method according to claim 10 or 11, further comprising:
receiving, by the second network element, a subscription request from the first network element, wherein the subscription request is used to subscribe to the first information.

13. A communication apparatus, configured to perform the method according to any one of claims 1 to 6, or configured to perform the method according to any one of claims 10 to 12.

14. A computer-readable storage medium, wherein the computer-readable storage medium stores computer-executable instructions; and when the computer-executable instructions are invoked by a computer, the computer is enabled to perform the method according to any one of claims 1 to 6, or perform the method according to any one of claims 10 to 12.

15. A communication system, comprising at least two apparatuses of:
a first network element configured to perform the method according to any one of claims 1 to 6;
a second network element configured to perform the method according to any one of claims 10 to 12; and
a management system configured to receive an edge application server instantiation request from the first network element; and instantiate a first edge application server corresponding to a first application in a first network.

## Patentansprüche

1. Verfahren zum Instanzieren eines Edge-Anwendungsservers, umfassend:
Empfangen erster Informationen von einem zweiten Netzwerkelement durch ein erstes Netzwerkelement oder einen Chip, wobei die ersten Informationen Netzwerkinformationen und Anwendungsinformationen umfassen, die Netzwerkinformationen ein erstes Netzwerk angeben, die Anwendungsinformationen eine erste Anwendung angeben und die ersten Informationen ferner eine Häufigkeit umfassen, mit der ein erstes Ereignis eintritt; und
das erste Ereignis darin besteht, dass ein Edge-Anwendungsserver, der der ersten Anwendung entspricht, im ersten Netzwerk nicht gefunden wird; und
Bestimmen durch das erste Netzwerkelement oder den Chip, wenn das erste Ereignis eine erste Bedingung erfüllt, dass ein erster Edge-Anwendungsserver, der der ersten Anwendung im ersten Netzwerk entspricht, instanziert werden soll.

2. Verfahren nach Anspruch 1, wobei die erste Bedingung darin besteht, dass die Häufigkeit, mit der das erste Ereignis eintritt, größer oder gleich einem zweiten Wert ist.

3. Verfahren nach Anspruch 1 oder 2, wobei das erste Netzwerkelement ein Anwendungsdienstleister ist und das Verfahren ferner Folgendes umfasst:
Senden einer Instanzierungsanforderung für einen Edge-Anwendungsserver durch das erste Netzwerkelement an ein Verwaltungssystem, wobei die Instanzierungsanforderung für den Edge-Anwendungsserver zum Instanzieren des ersten Edge-Anwendungsservers verwendet wird und die Instanzierungsanforderung für den Edge-Anwendungsserver die Netzwerkinformationen und die Anwendungsinformationen umfasst.

4. Verfahren nach einem der Ansprüche 1 bis 3, ferner umfassend: Senden einer Abonnementanforderung durch das erste Netzwerkelement an das zweite Netzwerkelement, wobei die Abonnementanforderung zum Abonnieren der ersten Informationen verwendet wird.

5. Verfahren nach einem der Ansprüche 1 bis 4, wobei die Netzwerkinformationen ferner eine Standortkennung sind.

6. Verfahren nach einem der Ansprüche 1 bis 4, wobei die Netzwerkinformationen mindestens eine Netzwerkkennung, eine Edge-Enabler-Serverkennung oder eine Edge-Konfigurationsserverkennung umfassen.

7. Verfahren nach einem der Ansprüche 1 bis 6, ferner umfassend: Senden der ersten Informationen durch das zweite Netzwerkelement an das erste Netzwerkelement.

8. Verfahren nach Anspruch 7, ferner umfassend:
Erkennen des ersten Ereignisses durch das zweite Netzwerkelement.

9. Verfahren nach Anspruch 3, ferner umfassend:
Empfangen der Instanzierungsanforderung für den Edge-Anwendungsserver vom ersten Netzwerkelement durch das Verwaltungssystem; und
Instanzieren des ersten Edge-Anwendungsservers.

10. Verfahren zum Instanzieren eines Edge-Anwendungsservers, umfassend:
Erkennen eines ersten Ereignisses durch ein zweites Netzwerkelement oder einen Chip, wobei das erste Ereignis darin besteht, dass ein einer ersten Anwendung entsprechender Edge-Anwendungsserver in einem ersten Netzwerk nicht gefunden wird; und
Senden erster Informationen durch das zweite Netzwerkelement und auf Grundlage des erkannten ersten Ereignisses an ein erstes Netzwerkelement, wobei die ersten Informationen Netzwerkinformationen und Anwendungsinformationen umfassen, die Netzwerkinformationen das erste Netzwerk angeben, die Anwendungsinformationen die erste Anwendung angeben und die ersten Informationen ferner eine Häufigkeit umfassen, mit der das erste Ereignis auftritt.

11. Verfahren nach Anspruch 10, wobei die ersten Informationen dazu dienen, das Instanzieren eines ersten Edge-Anwendungsservers, der der ersten Anwendung im ersten Netzwerk entspricht, zu bestimmen.

12. Verfahren nach Anspruch 10 oder 11, ferner umfassend:
Empfangen einer Abonnementanforderung vom ersten Netzwerkelement durch das zweite Netzwerkelement, wobei die Abonnementanforderung zum Abonnieren der ersten Informationen verwendet wird.

13. Kommunikationsvorrichtung, die dazu konfiguriert ist, das Verfahren nach einem der Ansprüche 1 bis 6 durchzuführen oder das Verfahren nach einem der Ansprüche 10 bis 12 durchzuführen.

14. Computerlesbares Speichermedium, wobei das computerlesbare Speichermedium computerausführbare Anweisungen speichert; und, wenn die computerausführbaren Anweisungen von einem Computer ausgeführt werden, der Computer in die Lage versetzt wird, das Verfahren nach einem der Ansprüche 1 bis 6 oder das Verfahren nach einem der Ansprüche 10 bis 12 durchzuführen.

15. Kommunikationssystem, das mindestens zwei der folgenden Vorrichtungen umfasst:
ein erstes Netzwerkelement, das dazu konfiguriert ist, das Verfahren nach einem der Ansprüche 1 bis 6 durchzuführen;
ein zweites Netzwerkelement, das dazu konfiguriert ist, das Verfahren nach einem der Ansprüche 10 bis 12 durchzuführen; und
ein Verwaltungssystem, das dazu konfiguriert ist, eine Instanzierungsanforderung für einen Edge-Anwendungsserver vom ersten Netzwerkelement zu empfangen; und einen ersten Edge-Anwendungsserver zu instanzieren, der einer ersten Anwendung in einem ersten Netzwerk entspricht.

## Revendications

1. Procédé d'instanciation d'un serveur d'application périphérique, comprenant :
la réception, par un premier élément de réseau ou une puce, de premières informations provenant d'un second élément de réseau, dans lequel les premières informations comprennent des informations de réseau et des informations d'application, les informations de réseau indiquent un premier réseau, les informations d'application indiquent une première application, et les premières informations comprennent également un nombre de fois qu'un premier événement se produit ; et le premier événement est qu'un serveur d'application périphérique correspondant à la première application n'est pas trouvé dans le premier réseau ; et
la détermination, par le premier élément de réseau ou la puce lorsque le premier événement satisfait une première condition, d'instancier un premier serveur d'application périphérique correspondant à la première application dans le premier réseau.

2. Procédé selon la revendication 1, dans lequel la première condition est que le nombre de fois où le premier événement se produit est supérieur ou égal à une seconde valeur.

3. Procédé selon la revendication 1 ou 2, dans lequel le premier élément de réseau est un fournisseur de service d'application, et le procédé comprend également :
l'envoi, par le premier élément de réseau, d'une demande d'instanciation de serveur d'application périphérique à un système de gestion, dans lequel la demande d'instanciation de serveur d'application périphérique est utilisée pour instancier le premier serveur d'application périphérique, et la demande d'instanciation de serveur d'application périphérique comprend les informations de réseau et les informations d'application.

4. Procédé selon l'une quelconque des revendications 1 à 3, comprenant également :
l'envoi, par le premier élément de réseau, d'une demande d'abonnement au second élément de réseau, dans lequel la demande d'abonnement est utilisée pour s'abonner aux premières informations.

5. Procédé selon l'une quelconque des revendications 1 à 4, dans lequel les informations de réseau sont un identifiant d'emplacement.

6. Procédé selon l'une quelconque des revendications 1 à 4, dans lequel les informations de réseau comprennent au moins l'un d'un identifiant de réseau, d'un identifiant de serveur d'activateur périphérique, ou d'un identifiant de serveur de configuration périphérique.

7. Procédé selon l'une quelconque des revendications 1 à 6, comprenant également :
l'envoi, par le second élément de réseau, des premières informations au premier élément de réseau.

8. Procédé selon la revendication 7, comprenant également :
la détection, par le second élément de réseau, du premier événement.

9. Procédé selon la revendication 3, comprenant également :
la réception, par le système de gestion, de la demande d'instanciation de serveur d'application périphérique provenant du premier élément de réseau ; et
l'instanciation du premier serveur d'application périphérique.

10. Procédé d'instanciation d'un serveur d'application périphérique, comprenant :
la détection, par un second élément de réseau ou une puce, d'un premier événement, dans lequel le premier événement est qu'un serveur d'application périphérique correspondant à une première application n'est pas trouvé dans un premier réseau ; et
l'envoi, par le second élément de réseau et sur la base du premier événement détecté, de premières informations à un premier élément de réseau, dans lequel les premières informations comprennent des informations de réseau et des informations d'application, les informations de réseau indiquent le premier réseau, les informations d'application indiquent la première application, et les premières informations comprennent également un nombre de fois où le premier événement se produit.

11. Procédé selon la revendication 10, dans lequel les premières informations servent à déterminer l'instanciation d'un premier serveur d'application périphérique correspondant à la première application dans le premier réseau.

12. Procédé selon la revendication 10 ou 11, comprenant également :
la réception, par le second élément de réseau, d'une demande d'abonnement provenant du premier élément de réseau, dans lequel la demande d'abonnement est utilisée pour s'abonner aux premières informations.

13. Appareil de communication, configuré pour réaliser le procédé selon l'une quelconque des revendications 1 à 6, ou configuré pour réaliser le procédé selon l'une quelconque des revendications 10 à 12.

14. Support de stockage lisible par ordinateur, dans lequel le support de stockage lisible par ordinateur stocke des instructions exécutables par ordinateur ; et lorsque les instructions exécutables par ordinateur sont invoquées par un ordinateur, l'ordinateur est activé pour réaliser le procédé selon l'une quelconque des revendications 1 à 6, ou réaliser le procédé selon l'une quelconque des revendications 10 à 12.

15. Système de communication, comprenant au moins deux appareils :
d'un premier élément de réseau configuré pour réaliser le procédé selon l'une quelconque des revendications 1 à 6 ;
d'un second élément de réseau configuré pour réaliser le procédé selon l'une quelconque des revendications 10 à 12 ; et
d'un système de gestion configuré pour recevoir une demande d'instanciation de serveur d'application périphérique provenant du premier élément de réseau ; et instancier un premier serveur d'application périphérique correspondant à une première application dans un premier réseau.
